# EUROPÄISCHE PATENTSCHRIFT

(11) **EP 3 275 356 B1**
(45) Veröffentlichungstag und Bekanntmachung des Hinweises auf die Patenterteilung: **16.02.2022**
(21) Anmeldenummer: 17001125.8
(22) Anmeldetag: 30.06.2017
(51) Int. Cl.: A47L 15/42, D06F 58/20

(54) **KONTROLLIERTE WASSERVEREISUNG IM WÄRMETAUSCHER**
CONTROLLED ICING IN HEAT EXCHANGER
GIVRAGE D'EAU CONTRÔLÉ DANS UN ÉCHANGEUR DE CHALEUR

(30) Priorität: 27.07.2016 CH 983162016
(43) Veröffentlichungstag der Anmeldung: 31.01.2018
(73) Patentinhaber: V-Zug AG, 6300 Zug (CH)
(72) Erfinder: MEIENBERG, Hilmar, 6340 Baar (CH)
(74) Vertreter: Sutter, Kurt

(56) Entgegenhaltungen:
- EP-A1- 0 637 724
- EP-A1- 2 692 937
- WO-A1-2014/177187
- WO-A1-2014/198300
- US-A- 6 101 821

## Beschreibung

### Gebiet der Erfindung

Die Erfindung betrifft einen Wärmetauscher, insbesondere zum Einbau in einer Waschmaschine oder in einem Geschirrspüler, mit einem Flüssigkeitsbehälter zur Aufnahme von Wasser und mit einer zumindest teilweise im Flüssigkeitsbehälter angeordneten Rohrleitung, zur Leitung eines Wärme aufnehmenden Fluids.

### Hintergrund

Wärmetauscher dieser Art werden beispielsweise in Geschirrspülmaschinen oder in Waschmaschinen eingesetzt. Dadurch soll die Wärme aus in einem Flüssigkeitsbehälter gespeicherten Wasser mittels einer Wärmepumpe einem Bottich zugeführt werden.

In EP2224049 wird ein derartiges Haushaltsgerät beschrieben. Das Abwasser aus dem Bottich, d.h. das verbrauchte Prozesswasser, wird über einen Flüssigkeitsbehälter geführt, bevor es zur Abwasserleitung gelangt. Der Verdampfer ist thermisch mit dem im Flüssigkeitsbehälter befindlichen Abwasser gekoppelt und entzieht diesem während dem Betrieb der Wärmepumpe Wärmeenergie, welche über einen Kondensator dem Prozesswasser im Bottich wieder zugeführt wird.

Beispielsweise zu Beginn des Waschprozesses befindet sich im Flüssigkeitsbehälter Abwasser vom letzten Waschgang, welches nun Zimmertemperatur aufweist. Über die Wärmepumpe, bzw. den Verdampfer, kann dem Abwasser Wärmeenergie entzogen und dem Prozesswasser zugeführt werden. Das Abwasser kann dabei soweit abgekühlt werden, dass es mindestens teilweise gefriert. Damit kann die latente Wärme des Phasenübergangs von flüssig nach fest genutzt werden.

EP2692937 zeigt einen Wärmetauscher gemäß dem Oberbegriff des Anspruchs 1.

### Darstellung der Erfindung

Es stellt sich die Aufgabe, den erwähnten Wärmetauscher zu verbessern.

Diese Aufgabe wird vom Wärmetauscher gemäss dem unabhängigen Anspruch gelöst.

Demgemäss umfasst der Wärmetauscher einen Flüssigkeitsbehälter zur Aufnahme von Wasser und eine zumindest teilweise im Flüssigkeitsbehälter angeordnete Rohrleitung, zur Leitung eines Wärme aufnehmenden Fluids.

Vorteilhaft kann der Flüssigkeitsbehälter ein Tank sein, in welchem die Flüssigkeit nicht ausgetauscht wird. In einer anderen besonderen Ausführungsform kann es sich beim Flüssigkeitsbehälter auch um einen Abwassertank handeln, welcher beispielsweise das aus einem Bottich eines Reinigungsgeräts abfliessende Wasser speichert. Somit wird das Abwasser nach jedem Reinigungsvorgang ausgewechselt.

Die im Flüssigkeitsbehälter angeordnete Rohrleitung ist mehrheitlich, insbesondere zu mehr als 75%, derart ausgebildet, dass bei einer Eisbildung im Flüssigkeitsbehälter Eisschichten entlang benachbarter gerader Rohrleitungsabschnitte in unterschiedlichen Vereisungsrichtungen ausgebildet werden, sodass Restwasser entlang einer Vereisungsfront entweichen kann.

Wird dem Wasser im Flüssigkeitsbehälter über die Rohrleitung Wärme entzogen bis das Wasser gefriert, so bilden sich die ersten Eisschichten direkt an der Oberfläche der Rohrleitung. Die von der Rohrleitung abgewandte Oberfläche der Eisbildung wird Vereisungsfront genannt. Diese Vereisungsfront bewegt sich mit zunehmendem Wärmeenergieentzug bzw. mit zunehmender Eisbildung von der Oberfläche der Rohrleitung in normaler Richtung weg. In Kontakt mit der Vereisungsfront steht noch nicht gefrorenes Restwasser. Die Vereisungsfront kann sich nun derart entwickeln, dass zwei Vereisungsfronten, welche sich von unterschiedlichen benachbarten Rohrleitungsabschnitten ausbilden, aufeinander prallen.

Die beschriebene Ausgestaltung des Wärmetauschers bzw. der Rohrleitung hat nun den Vorteil, dass Einschlüsse von Restwasser zwischen aufeinandertreffenden Vereisungsfronten möglichst vermieden werden, weil das Restwasser entlang der Vereisungsfronten entweichen kann.

Die Vermeidung des Einschlusses von Restwasser ist deshalb vorteilhaft, weil Wasser eine höhere Dichte als Eis aufweist, und bei einer Bildung von Wassereinschlüssen die darauffolgende Vereisung des eingeschlossenen Restwasser und eine damit verbundene Volumenzunahme zu Spannungen in den Rohrleitungen führen und diese dadurch beschädigt würden.

Rohrleitungsabschnitte sind dann "benachbart", falls deren Vereisungsfronten auf direktem Weg aufeinander treffen können, ohne dass eine andere Vereisungsfront dazwischen kommt. Dies wird in den weiter unten beschriebenen Figuren noch detaillierter dargestellt.

Dass die Rohrleitung "mehrheitlich" derart ausgebildet ist, bedeutet, dass mehr als die Hälfte der geraden Rohrleitungsabschnitte so ausgebildet sind, dass bei einer Eisbildung im Flüssigkeitsbehälter Eisschichten entlang benachbarter gerader Rohrleitungsabschnitte in unterschiedlichen Vereisungsrichtungen ausgebildet werden, sodass Restwasser entlang einer Vereisungsfront entweichen kann.

Die Vereisungsrichtungen sind dann "unterschiedlich", wenn die Vereisungsrichtungen in eine gemeinsame Ebene projiziert werden und dabei nicht parallel sind. Die Bedeutung der Vereisungsrichtungen wird weiter unten in der Figurenbeschreibung näher erläutert.

Durch die unterschiedlichen Vereisungsrichtungen sind die Vereisungsfronten benachbarter gerader Rohrleitungsabschnitte zueinander keilförmig angeordnet, sodass das Restwasser dadurch kontrolliert verdrängt wird.

Vorteilhaft sind die benachbarten geraden Rohrleitungsabschnitte mindestens zweimal, insbesondere mindestens dreimal, insbesondere mindestens fünfmal, insbesondere mindestens siebenmal, insbesondere mindestens zehnmal, so lang, wie ein Durchmesser der Rohrleitung der benachbarten geraden Rohleitungsabschnitte.

Im Weiteren können die benachbarten geraden Rohrleitungsabschnitte jeweils mindestens 5 cm, mindestens 10 cm oder mindestens 15 cm lang sein.

Dies hat den Vorteil, dass zumindest die langen Rohrleitungsabschnitte derart angeordnet sind, dass Restwasser entlang der Vereisungsfronten entweichen kann. Je nach Anordnung der Rohrleitungen im Wärmetauscher ist es nämlich nicht möglich, jeden einzelnen Rohrleitungsabschnitt entsprechend anzuordnen.

Die benachbarten geraden Rohrleitungsabschnitte sind schräg, mit einem Winkel von mindestens 0.5° zueinander angeordnet. In einer Ausführungsform sind die Rohrleitungsabschnitte schräg zueinander in einem Winkel von mindestens 1°, mindestens 2°, mindestens 3°, oder mindestens 5°, zueinander angeordnet.

Mit Vorteil sind die benachbarten geraden Rohrleitungsabschnitte mit einem Winkel von maximal 15°, maximal 10°, maximal 5°, oder maximal 3° schräg zueinander angeordnet.

Die schräge Anordnung benachbarter Rohrleitungsabschnitte unter den erwähnten Winkeln ist eine mögliche Anordnung, damit das Restwasser entlang den Vereisungsfronten entweichen kann. Da die Winkel zwischen den benachbarten Rohrleitungsabschnitten relativ klein gewählt sind, können die Rohrleitungsabschnitte dennoch kompakt im Flüssigkeitsbehälter angeordnet werden.

Für die Winkelbestimmung zweier gerader Rohrleitungsabschnitte sind die Mittellinien bzw. die Führungskurven der Rohrleitungsabschnitte heranzuziehen. Falls sich die beiden Mittellinien nicht schneiden, so ist die eine der beiden Mittelinien im Raum gedanklich derart parallel zu verschieben, dass sich die beiden Mittellinien schneiden. Hiervon ist dann der gemeinsame Winkel zu bestimmen.

Vorteilhaft weist die Rohrleitung mindestens zwei benachbarte gerade Rohrleitungsabschnitte auf, welche sich jeweils von einer ersten Tragvorrichtung, insbesondere einer ersten Traglamelle, bis zu einer zweiten Tragvorrichtung, insbesondere einer zweiten Traglamelle, erstrecken

Dies hat den Vorteil, dass mit den Traglamellen eine geordnete und kompakte Anordnung der Rohrleitungsabschnitte im Flüssigkeitsbehälter erzielt werden kann.

Im Weiteren kann die erste Tragvorrichtung und/oder die zweite Tragvorrichtung mindestens eine Durchflussöffnung aufweisen, zum Durchfliessen von Restwasser bei der Eisbildung im Flüssigkeitsbehälter. Bei den Durchflussöffnungen handelt es sich um Öffnungen, durch welche keine Rohrleitung hindurchverläuft.

Es hat sich gezeigt, dass nicht nur zwischen benachbarten Rohrleitungsabschnitten Wassereinschlüsse möglich sind, sondern auch zwischen Rohrleitungsabschnitten und den Tragvorrichtungen. Die Anordnung von Durchflussöffnungen in den Tragvorrichtungen kann diesem Problem entgegenwirken, sodass das Restwasser durch diese Durchflussöffnungen entweichen kann.

Mit Vorteil weist der Flüssigkeitsbehälter eine Abflussöffnung auf, zum Abfliessen von Restwasser aus dem Flüssigkeitsbehälter.

Weil das Eis ein grösseres Volumen als das Wasser im Flüssigkeitsbehälter einnimmt, hat eine Abflussöffnung den Vorteil, dass das Restwasser aus dem Flüssigkeitsbehälter entweichen kann, sodass kein Druck auf die Wandungen des Flüssigkeitsbehälters ausgeübt wird.

In einer besonderen Ausführungsform sind alle geraden Rohrleitungsabschnitte weniger weit zu ihren benachbarten geraden Rohrleitungsabschnitten angeordnet, als die geraden Rohrleitungsabschnitte zu einer Wandung des Flüssigkeitsbehälters.

Eine solche Anordnung hat den Vorteil, dass das Wasser bei der Eisbildung als letztes in der Nähe der Wandung des Flüssigkeitsbehälters gefriert. Somit kann beispielsweise frisches, warmes Abwasser, welches aus dem Bottich direkt in den Flüssigkeitsbehälter eingelassen wird, zumindest der Wandung des Flüssigkeitsbehälters entlang strömen, um den im Flüssigkeitsbehälter gebildeten Eisblock von aussen zum Schmelzen zu bringen.

Im Weiteren kann der Wärmetauscher in einem Reinigungsgerät, insbesondere in einer Waschmaschine oder in einem Geschirrspüler, angeordnet sein.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine isometrische Ansicht eines Wärmetauschers;
Fig. 2 eine Ansicht des Wärmetauschers aus Fig. 1 von oben;
Fig. 3 eine schematische Ansicht von benachbarten geraden Rohrleitungsabschnitten mit Eisbildung;
Fig. 4 eine Ansicht von rechts des Wärmetauschers aus Fig. 1; und
Fig. 5 bis 7 Detailansichten aus Fig. 4 mit einer schematischen Darstellung von verschiedenen Stadien der Eisbildung an vier geraden Rohrleitungsabschnitten.

### Weg zur Ausführung der Erfindung

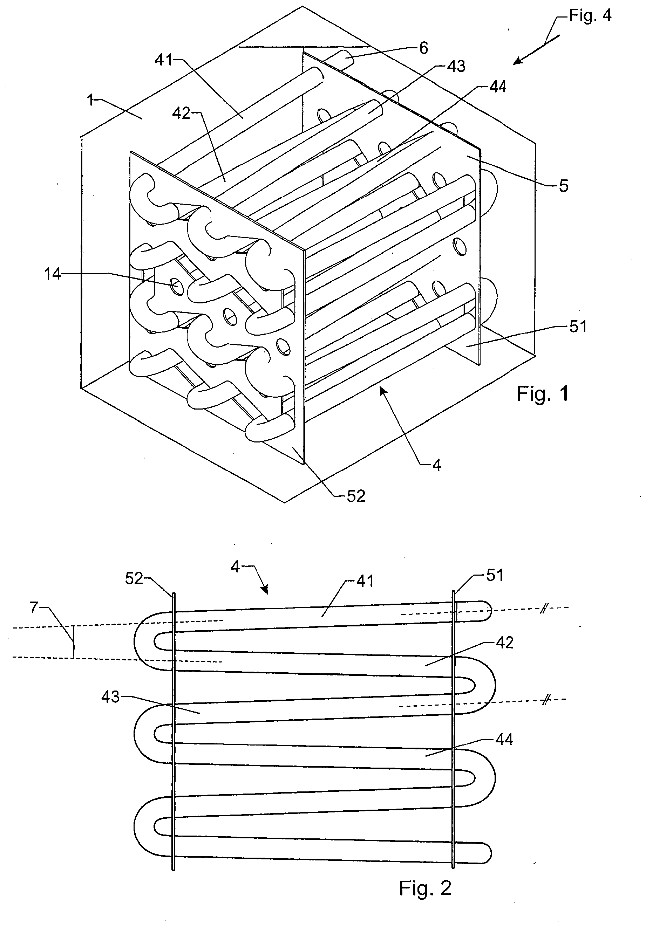

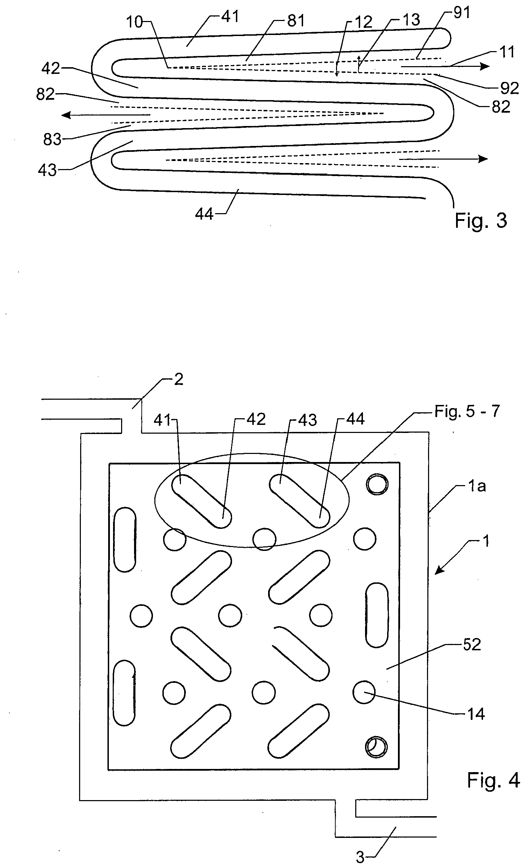

In Fig. 1 wird ein Wärmetauscher gezeigt, welcher einen Flüssigkeitsbehälter 1 aufweist. Dieser ist in der vorliegenden Figur nur teilweise dargestellt, sodass die im Flüssigkeitsbehälter 1 angeordneten Komponenten sichtbar sind. Beim Flüssigkeitsbehälter 1 handelt es sich grundsätzlich um einen geschlossenen Tank, je nach Ausführungsform mit einer Einlassöffnung 2 und einer Abflussöffnung 3 (dargestellt in Fig. 4).

Innerhalb des Flüssigkeitsbehälters 1 ist eine Rohrleitung 4 angeordnet, welche durch eine erste Tragvorrichtung 51 und durch eine zweite Tragvorrichtung 52, welche als Traglamellen ausgestaltet sind, getragen wird. Die Rohrleitung 4 innerhalb des Flüssigkeitsbehälters 1 bildet den Verdampfer einer Wärmepumpe. Innerhalb der Rohrleitung fliesst eine Flüssigkeit, insbesondere ein Kältemittel, welches innerhalb des Flüssigkeitsbehälters 1 über die Rohrleitung Wärme vom umliegenden Abwasser aufnimmt und dadurch in der Rohrleitung 4 verdampft.

D.h. die Rohrleitung 4 ist innerhalb des Flüssigkeitsbehälters mit Abwasser umgeben, welches abgekühlt und teilweise gefroren wird. Die dabei aufgenommene Wärme kann in einem ausserhalb des Flüssigkeitsbehälters angeordneten Kondensator (nicht gezeigt) der Wärmepumpe durch Kondensation des Gases wieder abgegeben werden.

Die Rohrleitung 1 tritt über eine Eintrittsöffnung 6 in den Flüssigkeitsbehälter 1 ein. Innerhalb des Flüssigkeitsbehälters 1 verläuft die Rohrleitung abwechslungsweise von der ersten Tragvorrichtung 51 zur zweiten Tragvorrichtung 52 und von der zweiten Tragvorrichtung 52 zur ersten Tragvorrichtung 51. Die Rohrleitung 1 verläuft somit schlangenförmig durch den Flüssigkeitsbehälter 1. Zwischen der ersten 51 und der zweiten 52 Tragvorrichtung sind gerade Rohrleitungsabschnitte 41 - 44 angeordnet. Auf den äusseren Seiten der Tragvorrichtungen 51 und 52 wird die Rohrleitung 4 jeweils gewendet.

Die geraden Rohrleitungsabschnitte 41 - 44 sind teilweise schräg, d.h. nicht parallel zueinander angeordnet und stehen zueinander in einem bestimmten Winkel. Beispielsweise sind die geraden Rohrleitungsabschnitte 41 und 42 schräg zueinander angeordnet. Auch die geraden Rohrleitungsabschnitte 43 und 44 sind schräg zueinander angeordnet. Im Gegensatz dazu sind allerdings die Rohrleitungsabschnitte 41 und 43 als auch 42 und 44 nicht schräg, sondern parallel zueinander angeordnet.

In Fig. 2 werden die Rohrleitung 4 und die Tragvorrichtungen 51 und 52 mit Ansicht von oben dargestellt. Die Rohrleitungsabschnitte 41 und 42 sind mit einem Winkel 7 schräg zueinander angeordnet. Der Winkel beträgt in der vorliegenden Ausführungsform 3.5°. Die geraden Rohrleitungsabschnitte 41 und 43 sind parallel zueinander angeordnet.

In Fig. 3 wird dargestellt, wie sich Eisschichten 81 bis 84 entlang der geraden Rohrleitungsabschnitte 41 bis 44 ausbilden. Um den geraden Rohrleitungsabschnitt 41 bildet sich eine Eisschicht 81. Um den benachbarten geraden Rohrleitungsabschnitt 42 bildet sich eine Eisschicht 82.

Die von der Rohrleitung abgewandte Oberfläche der Eisschichten wird Vereisungsfront 91, 92 genannt und ist in Fig. 3 mit gestrichelten Linien dargestellt. Die Vereisungsfronten 91 und 92 treffen am Aufprallpunkt 10 aufeinander. Je mehr die Eisschichten 81 und 82 an Dicke zunehmen, umso mehr bewegt sich der Aufprallpunkt 10 nach rechts in Richtung des Pfeils 11. Zwischen den Vereisungsfronten 91 und 92 ist noch nicht gefrorenes Restwasser vorhanden, welches aufgrund der wachsenden Eisschichten 81 und 82 nach rechts in Richtung des Pfeils 11 verdrängt wird. Aufgrund dieser schräg zueinander angeordneten geraden Rohrleitungsabschnitte 41 und 42 bilden sich die Eisschichten 81 und 82 in unterschiedliche Vereisungsrichtungen 12 und 13 aus, sodass das Restwasser kontrolliert verdrängt wird. Denn würde eingeschlossenes Restwasser gefrieren, würde durch die damit verbundene Volumenzunahme Druck auf die Rohrleitung 4 ausgeübt werden. Die Vereisungsrichtungen 12 und 13 sind durch Pfeile dargestellt. Die Vereisungsrichtungen sind dann unterschiedlich, wenn die Pfeile in eine gemeinsame Ebene projiziert werden und nicht parallel angeordnet sind.

Da die Eisschichten 81 und 82 auf direktem Weg aufeinanderprallen können, handelt es sich bei den geraden Rohrleitungsabschnitten 41 und 42 um benachbarte Rohrleitungsabschnitte. Die Eisschichten 81 und 83 prallen allerdings nicht direkt aufeinander, sodass die geraden Rohrleitungsabschnitte 41 und 43 nicht benachbart zueinander angeordnet sind. Die nicht zueinander benachbarten Rohrleitungsabschnitte 41 und 43 können somit auch parallel zueinander angeordnet sein, weil sie nicht direkt aufeinander treffen.

In Fig. 4 ist eine weitere Ansicht des Wärmetauschers dargestellt. Bei dieser Ansicht wird auf den Wärmetauscher aus Fig. 1 von rechts hinten draufgeschaut, wie es mit einem Pfeil in Fig. 1 dargestellt ist.

Bei dieser Perspektive ist der Flüssigkeitsbehälter 1 sichtbar mit seiner Wandung 1a, welche eine Einlassöffnung 2 und eine Abflussöffnung 3 aufweist. Über die Einlassöffnung 2 kann beispielsweise aus dem Bottich abgelassenes, warmes Abwasser in den Flüssigkeitsbehälter 1 eingelassen werden, von welchem in einem späteren Prozessschritt über die Rohrleitung 1 Wärmeenergie entzogen werden kann.

Über die Auslassöffnung 3 kann Abwasser aus dem Flüssigkeitsbehälter 1 abgelassen werden. Dabei kann es sich einerseits um Restwasser handeln, welches durch die Vereisung aus dem Flüssigkeitsbehälter 1 verdrängt wird, oder es kann sich um überschüssiges Abwasser handeln, welches durch neues, über die Einlassöffnung 2 eingelassenes Abwasser verdrängt wird.

Im Weiteren ist auf der Fig. 4 die Tragvorrichtung 52 dargestellt. Diese weist mehrere Durchflussöffnungen 14 auf, durch welche das Restwasser bei der Eisbildung entweichen kann. Durch diese Durchflussöffnungen 14 verlaufen keine Rohrleitungsabschnitte.

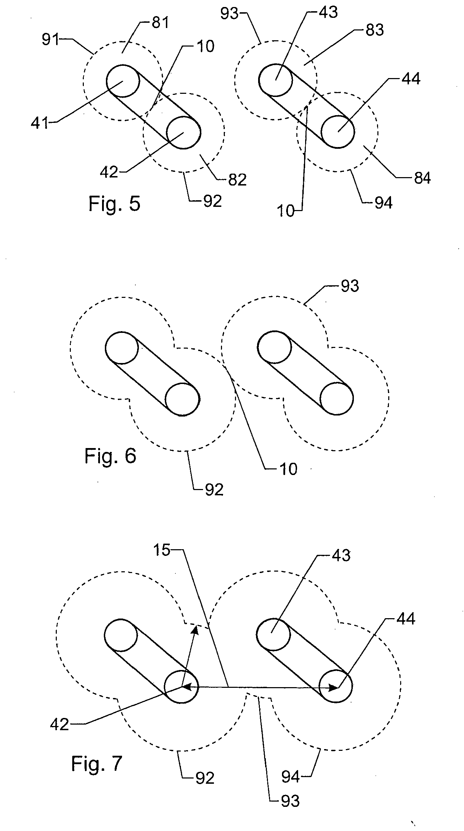

In den Fig. 5 bis 7 wird ein Ausschnitt aus der Fig. 4 näher dargestellt und zwar als Schnittzeichnung durch die geraden Rohrleitungsabschnitte 41 bis 44. Dabei wird die Eisbildung in unterschiedlichen Stadien illustriert. Die Vereisungsfronten sind wie bereits in Fig. 3 als gestrichelte Linien dargestellt.

Während in Fig. 5 noch relativ dünne Eisschichten 81 - 84 vorhanden sind, werden diese in den Fig. 6 und 7 durch zusätzlichen Wärmeentzug aus dem Abwasser, welches die Rohrleitung 4 umgibt, schrittweise dicker. In Fig. 5 sind die Eisschichten 81 - 84 bereits so stark angewachsen, dass die Vereisungsfronten 91 und 92, als auch die Vereisungsfronten 93 und 94 an den Aufprallpunkten 10 auf direktem Weg aufeinander prallen.

In Fig. 6 sind die Eisschichten bereits so dick, dass auch die Vereisungsfronten 92 und 93, welche von den geraden Rohrleitungsabschnitten 42 und 43 ausgehen, am Aufprallpunkt 10 auf direktem Weg aufeinander prallen. Folglich sind auch diese beiden geraden Rohrleitungsabschnitte 42 und 43 zueinander benachbart.

In Fig. 7 nimmt die Dicke der Eisschichten noch weiter zu. Hierbei ist ersichtlich dass die Vereisungsfronten 92 und 94 nicht auf ihrem direkten Weg 15 aufeinander prallen, weil die Vereisungsfront 93 dazwischen kommt. Der direkte Weg 15 zwischen den beiden Vereisungsfronten 92 und 94 bzw. zwischen den geraden Rohrleitungsabschnitten 42 und 44 ist durch einen Doppelfeil dargestellt. Zu einem späteren Zeitpunkt ist es durchaus möglich, dass die Vereisungsfronten 92 und 94 an einem anderen Ort dennoch aufeinander prallen. Da dies aber nicht auf dem direkten Weg passiert, gibt es dabei keine Lufteinschlüsse.

## Patentansprüche

1. Waschmaschine oder Geschirrspüler mit einem Wärmetauscher
- einem Flüssigkeitsbehälter (1), zur Aufnahme von Wasser,
- einer zumindest teilweise im Flüssigkeitsbehälter (1) angeordneten Rohrleitung (4), zur Leitung eines Wärme aufnehmenden Fluids,
wobei die Rohrleitung (4) mehrheitlich derart ausgebildet ist, dass bei einer Eisbildung im Flüssigkeitsbehälter (1) Eisschichten (81-84) entlang benachbarter gerader Rohrleitungsabschnitte (41-44) in unterschiedlichen Vereisungsrichtungen (12, 13) ausgebildet werden, sodass Restwasser entlang einer Vereisungsfront (91-94) entweichen kann, **dadurch gekennzeichnet, dass** die benachbarten geraden Rohrleitungsabschnitte (41-44) schräg zueinander angeordnet sind, wobei diese mit einem Winkel (7) von mindestens 0.5° zueinander angeordnet sind.

2. Waschmaschine oder Geschirrspüler nach Anspruch 1, wobei die benachbarten geraden Rohrleitungsabschnitte (41-44) mindestens zweimal, insbesondere mindestens dreimal, insbesondere mindestens fünfmal, insbesondere mindestens siebenmal, insbesondere mindestens zehnmal, so lang sind, wie ein Durchmesser der Rohrleitung (4) der benachbarten geraden Rohleitungsabschnitte (41-44).

3. Waschmaschine oder Geschirrspüler nach einem der vorangehenden Ansprüche, wobei die benachbarten geraden Rohrleitungsabschnitte (41-44) jeweils mindestens 5 cm, mindestens 10 cm oder mindestens 15 cm lang sind.

4. Waschmaschine oder Geschirrspüler nach einem der vorangehenden Ansprüche, wobei die benachbarten geraden Rohrleitungsabschnitte (41-44) mit einem Winkel (7) von mindestens 1°, mindestens 2°, mindestens 3°, oder mindestens 5°, zueinander angeordnet sind.

5. Waschmaschine oder Geschirrspüler nach einem der vorangehenden Ansprüche, wobei die benachbarten geraden Rohrleitungsabschnitte (41-44) mit einem Winkel (7) von maximal 15°, maximal 10°, maximal 5°, oder maximal 3° schräg zueinander angeordnet sind.

6. Waschmaschine oder Geschirrspüler nach einem der vorangehenden Ansprüche, wobei die Rohrleitung (4) mindestens zwei benachbarte gerade Rohrleitungsabschnitte (41-44) aufweist, welche sich jeweils von einer ersten Tragvorrichtung (51), insbesondere einer ersten Traglamelle, bis zu einer zweiten Tragvorrichtung (52), insbesondere einer zweiten Traglamelle, erstrecken.

7. Waschmaschine oder Geschirrspüler nach Anspruch 6, wobei die erste Tragvorrichtung (51) und/oder die zweite Tragvorrichtung (52) mindestens eine Durchflussöffnung (14) aufweist, zum Durchfliessen von Restwasser bei der Eisbildung im Flüssigkeitsbehälter (1), durch welche keine Rohrleitung hindurchverlaufend angeordnet ist.

8. Waschmaschine oder Geschirrspüler nach einem der Ansprüche 1 bis 5, aufweisend eine erste Tragvorrichtung (51) und/oder eine zweite Tragvorrichtung (52) zur Tragung der Rohrleitung (4), welche mindestens eine Durchflussöffnung (14) aufweisen, zum Durchfliessen von Restwasser bei der Eisbildung im Flüssigkeitsbehälter (1), durch welche keine Rohrleitung hindurchverlaufend angeordnet ist.

9. Waschmaschine oder Geschirrspüler nach einem der vorangehenden Ansprüche, wobei der Flüssigkeitsbehälter (1) eine Abflussöffnung (3) aufweist, zum Abfliessen von Restwasser aus dem Flüssigkeitsbehälter (1).

10. Waschmaschine oder Geschirrspüler nach einem der vorangehen-den Ansprüche, wobei alle geraden Rohrleitungsabschnitte (41-44) weniger weit zu ihren benachbarten geraden Rohrleitungsabschnitten (41-44) angeordnet sind, als die geraden Rohrleitungsabschnitte zu einer Wandung (1a) des Flüssigkeitsbehälters (1) beabstandet sind.

## Claims

1. Washing machine or dishwasher with a heat exchanger having
- a liquid container (1), for holding water,
- a pipe (4), arranged at least partially in the liquid container (1), for conducting a heat-absorbing fluid,
wherein the pipe (4) is formed for the most part in such a way that, in the event of ice formation in the liquid container (1), ice layers (81-84) are formed along adjacent straight pipe sections (41-44) in different icing directions (12, 13), so that residual water can escape along an icing front (91-94), **characterized in that** the adjacent straight pipe sections (41-44) are arranged obliquely with respect to one another, these being arranged at an angle (7) of at least 0.5° with respect to one another.

2. Washing machine or dishwasher according to claim 1, wherein the adjacent straight pipe sections (41-44) are at least twice, in particular at least three times, in particular at least five times, in particular at least seven times, in particular at least ten times, as long as a diameter of the pipe (4) of the adjacent straight pipe sections (41-44).

3. Washing machine or dishwasher according to any one of the preceding claims, wherein the adjacent straight pipe sections (41-44) are each at least 5 cm, at least 10 cm or at least 15 cm long.

4. Washing machine or dishwasher according to any one of the preceding claims, wherein the adjacent straight pipe sections (41-44) are arranged with an angle (7) of at least 1°, at least 2°, at least 3°, or at least 5°, with respect to each other.

5. Washing machine or dishwasher according to any one of the preceding claims, wherein the adjacent straight pipe sections (41-44) are arranged obliquely with respect to each other with an angle (7) of at most 15°, at most 10°, at most 5°, or at most 3°.

6. Washing machine or dishwasher according to one of the preceding claims, wherein the pipe (4) has at least two adjacent straight pipe sections (41-44), which each extend from a first supporting device (51), in particular a first supporting lamella, to a second supporting device (52), in particular a second supporting lamella.

7. Washing machine or dishwasher according to claim 6, wherein the first supporting device (51) and/or the second supporting device (52) has at least one flow-through opening (14), for the flow-through of residual water during the formation of ice in the liquid container (1), through which no pipe is arranged to extend.

8. Washing machine or dishwasher according to one of the claims 1 to 5, comprising a first supporting device (51) and/or a second supporting device (52) for supporting the pipe (4), which have at least one flow-through opening (14), for the flow-through of residual water during the formation of ice in the liquid container (1), through which no pipe is arranged to extend.

9. Washing machine or dishwasher according to one of the preceding claims, wherein the liquid container (1) comprises a drain opening (3), for draining residual water from the liquid container (1).

10. Washing machine or dishwasher according to any one of the preceding claims, wherein all straight pipe sections (41-44) are arranged less far from their adjacent straight pipe sections (41-44) than the straight pipe sections are spaced from a wall (1a) of the liquid container (1).

## Revendications

1. Machine à laver ou lave-vaisselle, comprenant
- un réservoir de liquide (1) destiné à contenir de l'eau,
- une conduite tubulaire (4) disposée au moins partiellement dans le réservoir de liquide (1), pour la conduite d'un fluide absorbant la chaleur,
la conduite tubulaire (4) étant majoritairement conçue de telle sorte que, en cas de formation de glace dans le réservoir de liquide (1), des couches de glace (81-84) sont formées le long de sections de conduite tubulaire droites voisines (41-44) dans différentes directions de givrage (12, 13), de sorte que l'eau résiduelle peut s'échapper le long d'un front de givrage (91-94), **caractérisé en ce que** les sections de conduite tubulaire droites adjacentes (41-44) sont disposées de manière oblique les unes par rapport aux autres et sont agencées dans un angle d'au moins 0.5° les unes par rapport aux autres.

2. Machine à laver ou lave-vaisselle selon la revendication 1, dans laquelle les sections de conduite tubulaire droites voisines (41-44) sont au moins deux fois, en particulier au moins trois fois, en particulier au moins cinq fois, en particulier au moins sept fois, en particulier au moins dix fois, plus longs qu'un diamètre de la conduite tubulaire (4) des sections de conduite tubulaire droites voisines (41-44).

3. Machine à laver ou lave-vaisselle selon l'une des revendications précédentes, dans laquelle les sections de conduite tubulaire droites voisines (41-44) ont chacun une longueur d'au moins 5 cm, d'au moins 10 cm ou d'au moins 15 cm.

4. Machine à laver ou lave-vaisselle selon l'une des revendications précédentes, dans laquelle les sections de conduite tubulaire droites voisines (41-44) sont disposés avec un angle (7) d'au moins 1°, d'au moins 2°, d'au moins 3°, ou d'au moins 5°, les uns par rapport aux autres.

5. Machine à laver ou lave-vaisselle selon l'une des revendications précédentes, dans laquelle les sections de conduite droites voisines (41-44) sont disposées de manière oblique les unes par rapport aux autres avec un angle (7) d'au maximum 15°, d'au maximum 10°, d'au maximum 5°, ou d'au maximum 3°.

6. Machine à laver ou lave-vaisselle selon l'une des revendications précédentes, dans laquelle la conduite tubulaire (4) comporte au moins deux sections de conduite tubulaire droites voisines (41-44) qui s'étendent chacun depuis un premier dispositif de support (51), notamment une première ailette de support, jusqu'à un deuxième dispositif de support (52), notamment une deuxième ailette de support.

7. Machine à laver ou lave-vaisselle selon la revendication 6, dans laquelle le premier dispositif de support (51) et/ou le deuxième dispositif de support (52) présente au moins une ouverture de passage (14), pour le passage de l'eau résiduelle lors de la formation de glace dans le réservoir de liquide (1), à travers lequel aucune conduite n'est disposée.

8. Machine à laver ou lave-vaisselle selon l'une des revendications 1 à 5, comprenant un premier dispositif de support (51) et/ou un deuxième dispositif de support (52) pour supporter la conduite tubulaire (4), qui présentent au moins un orifice d'écoulement (14), pour le passage de l'eau résiduelle lors de la formation de glace dans le réservoir de liquide (1), à travers lequel aucun conduit tubulaire n'est disposé.

9. Machine à laver ou lave-vaisselle selon l'une des revendications précédentes, dans laquelle le réservoir de liquide (1) présente un orifice de décharge (3) pour l'écoulement de l'eau résiduelle hors du réservoir de liquide (1).

10. Machine à laver ou lave-vaisselle selon l'une des revendications précédentes, dans lequel toutes les sections de conduite tubulaire droites (41-44) sont disposées moins loin de leurs sections de conduite tubulaire droites voisines (41-44) que les sections de conduite tubulaire droites d'une paroi (1a) du réservoir de liquide (1).
